# EUROPÄISCHE PATENTSCHRIFT

(11) **EP 0 675 920 B1**
(45) Veröffentlichungstag und Bekanntmachung des Hinweises auf die Patenterteilung: **11.03.1998**
(21) Anmeldenummer: 94903719.6
(22) Anmeldetag: 20.12.1993
(51) Int. Cl.: C08L 3/00, C08L 93/00, C08L 89/00, B29C 45/00

(54) **VERWENDUNG EINER ZUSAMMENSETZUNG FÜR EINEN WERKSTOFF IN SPRITZGUSSVERFAHREN**
USE OF A COMPOSITION FOR THE MANUFACTURE OF A MATERIAL BY INJECTION MOULDING
UTILISATION D'UNE COMPOSITION POUR LA FABRICATION DE MATERIAUX A MOULAGE PAR INJECTION

(30) Priorität: 19.12.1992 DE 9217408 U; 17.06.1993 DE 4320034; 09.08.1993 DE 4326730
(43) Veröffentlichungstag der Anmeldung: 11.10.1995
(73) Patentinhaber: METRAPLAST H. Jung GmbH, 91130 Niederau (DE)
(72) Erfinder: RIEDL, Jürgen, D-95448 Bayreuth (DE)
(74) Vertreter: Tergau, Enno, Dipl.-Ing.
(86) Internationale Anmeldenummer: DE9301224
(87) Internationale Veröffentlichungsnummer: WO9414886

(56) Entgegenhaltungen:
- EP-A- 0 118 240
- WO-A-90/14935
- WO-A-93/20140
- CA-A- 1 106 555
- FR-A- 837 617
- GB-A- N14 125
- GB-A- 252 656
- DATABASE WPI Week 8943, Derwent Publications Ltd., London, GB; AN 312865 & JP,A,1 230 672 (YAMAOKA) 14. September 1989 & PATENT ABSTRACTS OF JAPAN vol. 13, no. 556 (C-664)11. Dezember 1989
- RÖMPP, Chemielexikon, 9. Auflage, Band 3, Seite 1734

## Beschreibung

Die Erfindung betrifft die Verwendung einer Zusammensetzung für einen Werkstoff im Spritzgußverfahren. Derartige Werkstoffe, bei denen es sich üblicherweise um Kunststoffe handelt, werden z.B. für die Herstellung von Formteilen für die unterschiedlichsten Anwendungsbereiche eingesetzt. Beispielsweise können daraus im Spritzgußverfahren Formteile für die Innenausstattung von Automobilen, wie Armaturentafeln, Tür- und Konsolenverkleidungen hergestellt werden. Bekanntlich bestehen Automobile aus einer Vielzahl unterschiedlichster Werkstoffe. Bei der Entsorgung tritt nun das Problem auf, daß die einzelnenen Werkstoffe möglichst sortenrein voneinander getrennt werden müssen, um sie entweder umweltverträglich deponieren oder stofflichen und thermischen Wiederverwertungskreisläufen zuführen zu können.

Das Stoff-Recycling der aus den bekannten Spritzgußmassen hergestellten Formteile wird aufgrund fehlender Kapazitäten und der begrenzten Anwendungsmöglichkeiten der Recyclate nur in relativ geringem Umfang praktiziert. Es ist auch im Hinblick auf seine Energie- und CO₂-Bilanz im Vergleich zur "Neuherstellung" der Kunsstoffe relativ ungünstig, zumal wenn man die für den Transport der wiederzuverwertenden Teile, deren sortenreine Trennung, Zerkleinerung und Wiederaufschmelzung notwendige Enerie in die Rechnung miteinbezieht. Da diese Energie zum größten Teil aus fossilen Brennstoffen gewonnen ist, wird die Ökobilanz für den Recycling-Prozeß, zumindest was den CO₂-Ausstoß anbelangt, auf der Soll-Seite belastet. Ein Großteil des "Kunststoffmülls" wird daher entweder auf Deponien abgelagert oder auf umstrittene Art und Weise in Müll-Heizkraftwerken verbrannt.

Ein Nachteil der bekannten Werkstoffe liegt auch darin, daß sie aufgrund ihrer synthetischen Natur praktisch nicht biologisch abbaubar sind. Nachteilig ist weiterhin, daß im Falle des thermischen Recyclings der bekannten Werkstoffe die Atmosphäre durch den Ausstoß erheblicher CO₂-Mengen belastet wird. Davon wird nur ein kleiner Teil in den natürlichen Kreislauf, etwa durch Einbau in Pflanzenmasse oder Lösung in den Weltmeeren, zurückgeführt.

Ein weiterer Nachteil der bekannten Werkstoffe liegt darin, daß zu ihrer Herstellung relativ viel Energie notwendig ist. Da diese Energie in der Regel aus fossilen Brennstoffen gewonnen ist, ist damit wiederum ein entsprechender CO₂-Ausstoß verknüpft.

In der EP-0474095 A1 ist eine Zusammensetzung für das Formen biologisch abbaubarer Gebrauchsgegenstände beschrieben. Diese Zusammensetzung besteht im wesentlichen aus stärkehaltigen Samenkömem, Wasser und Zusatzstoffen wie Weichmachem. Sie eignen sich daher nur zur Herstellung von Gebrauchsartikeln wie Teller, Becher und Verpackungsmaterial. Produkte also, an deren mechanische Eigenschaften keine allzu großen Forderungen gestellt werden. Die bekannte Zusammensetzung würde sich daher nicht zur Herstellung beispielsweise von Armaturen oder Seitenverkleidungsteilen in Kraftfahrzeugen oder sonstigen Formkörpern eignen, die eine hohe Festigkeit, Elastizität und Lebensdauer aufweisen müssen, wie beispielsweise herkömmlich verwendete ABS- oder PP-Kunststoffe.

Aus GB 2 246 355 A ist eine biologisch abbaubare Zusammensetzung bekannt, die Zellulosefasern, ein thermoplastisches Harz und Chitin enthält. Ein Nachteil dieser Zusammensetzung besteht in der Verwendung von Chitin, das aus den Panzem von Crustaceen hergestellt werden soll. Es dürfte hier das Problem der Beschaffung von größeren Mengen Chinin bestehen. Bekanntermaßen geht die Produktion der Weltmeere an Krustentieren, etwa Krebsen und Gamelen zum einen ständig zurück. Zum anderen wird es problematisch sein, die Krusten, die zum großen Teil erst beim Verzehr dieser Meerestiere anfallen, mit vertretbarem Aufwand einzusammeln. Ein weiterer Nachteil der bekannten Zusammensetzung besteht darin, daß als Harz Kunstharze wie Polyurethane, Polyacrylate, Polyvinylacetate, Polyamide und Polyester eingesetzt werden. Es handelt sich hier also um künstliche Harze, die mit Energieaufwand und unter Belastung der Umwelt erst hergestellt werden müsse.

In der DE-Patentschrift Nr. 8465 ist ein Verfahren zur Herstellung eines hartgummiähnlichen Stoffes beschrieben. Dabei werden verschiedene Kopalsorten in ätherischen Lösungsmitteln aufgelöst, die Lösungen zusammengeschüttet, durchmischt, anschließend wieder eingedampft, wieder getrocknet, gemahlen und mit einem Zusatz von vegetabilischen Fasern versehen. Die so erhaltene Masse wird dann zur Verarbeitung geschmolzen, in Formen gepreßt und unter Druck erkalten gelassen. Die mit dieser bekannten Zusammensetzung erhaltenen Formteile weisen im wesentlichen die mechanischen Eigenschaften der zugrundeliegenden Kopale auf. Die enthaltenen Fasern bewirken zwar eine Eigenschaftsveränderung im Sinne der Glasfaserverstärkung eines GFK-Kunststoffes. Sie können jedoch die dem Kopal innewohnenden mechanischen Eigenschaften nicht entscheidend verändern. Die mechanischen Eigenschaften dieser mit vegetabilischen Fasem gestreckten Kopale sind jedoch nicht derart, daß sie herkömmliche Werkstoffe wie PP oder ABS ersetzen könnten. Ein weiterer Nachteil besteht darin, daß in einem aufwendigen Verfahren die Kopale erst gelöst und dann das Lösungsmittel unter Energieaufwand wieder entfernt werden muß.

Davon ausgehend ist es die Aufgabe der Erfindung, eine alternative Verwendung einer Zusammensetzung für einen Werkstoff vorzusehen, die wenigstens ein Naturharz und wenigstens ein Stärke und/oder Eiweiß enthaltendes Naturprodukt umfaßt.

Diese Aufgabe wird durch die kennzeichnenden Merkmale des Anspruches 1 gelöst.

Die an sich bekannte Zusammensetzung enthält wenigstens ein Naturharz und einen oder mehrere Stärke und/oder Eiweiß enthaltende Naturprodukte, also nachwachsende Rohstoffe! Unter nachwachsenden Rohstoffen sind dabei nicht nur pflanzliche sondern auch tierische Naturprodukte wie beispielsweise Wolle, Leder, Serumalbumin etc. zu verstehen.

Die Gewinnung zumindest der pflanzlichen Rohstoffe erfordert nur einen relativ geringen Energieaufwand, etwa für die Ernte, die Aufbereitung und die Zerkleinerung. Da die erfindungsgemäße Zusammensetzung bzw. die daraus hergestellten Werkstoffe (im folgenden wird meist auf letztere Bezug genommen) im wesentlichen aus nachwachsenden Rohstoffen besteht, lassen sie sich CO₂-neutral verbrennen. Die bei der Verbrennung von nachwachsenden Rostoffen ausgestoßene CO₂-Menge ist praktisch identisch mit der CO₂-Menge, die zum Aufbau der gleichen Menge an Biomasse nötig ist. Erfolgt die Verbrennung in einem Müll-Heizkraftwerk, kann die von der Pflanze in chemische Energie umgewandelte Sonnenenergie in Form von Wärme zu Heizzwecken nutzbar gemacht werden. Die erfindungsgemäßen Werkstoffe sind biologisch abbaubar. Für das bei den aeroben Abbauprozessen während der Kompostierung entstehende CO₂ gilt das oben Gesagte analog.

Aus dem erfindungsgemäßen Werkstoff hergestellte Formteile können natürlich auch einem stofflichen Wiederverwertungskreislauf zugeführt werden. Dazu werden die Formteile granuliert, das so erhaltene Granulat gegebenenfalls mit neuen Ausgangsstoffen verschnitten und in üblicher Weise verarbeitet. Aufgrund der unter Umständen sehr langen Gebrauchsdauer eines Formteils und der bei der Wiederaufbereitung auftretenden thermischen Belastung ist eine stoffliche Wiederverwertung jedoch nicht beliebig oft wiederholbar.

Die mit der Zusammensetzung hergestellten Werkstoffe bzw. Gegenstände weisen mechanische und physikalische Eigenschaften auf, die denen von herkömmlichen Kunststoffen vergleichbar sind.

In Anspruch 2 sind Naturprodukte angegeben, die sich aufgrund ihres hohen Stärkegehaltes besonders für die erfindungsgemäßen Werkstoffe eignen. Es können beispielsweise Weizen, Hafer, Mais, Gerste, Roggen, aber auch Samenkörner wie die des Buchweizens (Fagopyrum esculentum) oder die Samen von Fabaceen, z.B. der Soja-Bohne verwendet werden. Generell besteht hinsichtlich der Pflanzenart keinerlei Einschränkung. Neben stärkehaltigen Samen kommen aber auch andere speichernde Pflanzenteile wie beispielsweise Sproß- oder Wurzelknollen in Frage. Ein Beispiel dafür ist in Anspruch 4 angegeben. Neben der dort genannten Kartoffel kann auch die tropische Süßkartoffel (Patate) Verwendung finden. Nebenbei sei bemerkt, daß zur Herstellung der erfindungsgemäß zu verwendenden Werkstoffe die genannten Naturprodukte nicht in einer Qualität vorliegen müssen, die sonst für deren Verzehr zu fordem ist. Sie können vielmehr von minderwertiger oder für den Verzehr unbrauchbarer Qualität sein. Durch die in Anspruch 3 genannte Maßnahme können Werkstoffe mit einer aufgelockerten Struktur und mit einer entsprechend geringeren Dichte erhalten werden. Das Popcorn wird dabei granuliert oder pulverisiert und als Füllstoff den anderen Ausgangsstoffen beigemengt. Die im Anspruch 5 genannte Zusammensetzung ist insofern vorteilhaft, als das Holzmehl ein billiger Rohstoff ist.

Als Naturharze können wie in Anspruch 6 angegeben, Kopale und DammarHarze Verwendung finden. Kopale sind halbfossile Harze von Agathis-Arten, die z.B. in den Küstenstreifen der Tropengebiete aus etwa 1 m tiefen Sanden in Form von harten, mehrere Jahrhunderte oder Jahrtausende alten Brocken gesammelt werden. Kopale sind beispielsweise unter der Bezeichnung Kaurikopal oder Manilakopal im Handel erhältlich. Neben den fossilen Kopalen werden auch heute noch verschiedene Kopal-Sorten von Bäumen gesammelt. Diese Harze sind insofern vorteilhaft, als sie CO₂-neutral verbrenn- oder kompostierbar sind. Kopale sind zwar chemisch relativ widerstandsfähig, sind jedoch unter den Bedingungen einer üblichen Verrottung, nämlich Feuchtigkeit, Wärme, Destruententätigkeit etc. im Vergleich zu Kunststoffen wesentlich leichter biologisch abbaubar. Ihre Haltbarkeit in den o.g. Küstensanden liegt an dem Fehlen der genannten biologisch aktiven Umgebung.

Neben Kopalen und Dammar-Harzen kann auch Gilsonit eingesetzt werden. Gilsonite sind nach ihrem Entdecker S. Gilson genannte Naturasphalte, die in größeren Mengen in Utah vorkommen. Sie bestehen zu einem Großteil aus Harzen. Daneben enthalten sie Asphaltite und Öle in unterschiedlichen Zusammensetzungen. Eine weitere vorteilhafte Zusammensetzung wird erhalten, wenn der erfindungsgemäßen Mischung Zucker zugesetzt ist (Anspruch 8). Der Zucker kann dabei in Form von getrockneten oder zerkleinerten Zuckerrüben oder Zuckerrohr vorhanden sein oder als Rein- oder Rohzucker zugesetzt sein. Es können damit ebenfalls plastifizierbare und mit den üblichen Verfahren verarbeitbare Massen erhalten werden. Der Anteil an stärkehaltigen Naturprodukten kann bei Anwesenheit von Zucker oder Zuckerrüben bzw. Zuckerrohr geringer sein. Durch den Zusatz von Naturlatex nach Anspruch 9 kann die Elastizität der erfindungsgemäßen Werkstoffe bzw. der damit hergestellten Gegenstände erhöht werden.

Die in Anspruch 10 angegebene Zusammensetzung unterscheidet sich von den bisher genannten dadurch, daß ihr Stärke und/oder Dextrin und pflanzliche oder tierische Eiweiße in isolierter Form, etwa als Milchpulver oder Stärkepulver beigefügt ist. Es hat sich gezeigt, daß sich damit kunststoffähnliche Werkstoffe bzw. Spritzgußmassen herstellen lassen, deren Eigenschaften mit denen herkömmlicher Kunststoffe vergleichbar sind.

Die Lehre der Ansprüche 12 bis 16 bewirkt eine Armierung bzw. Verstärkung des erfindungsgemäß zu verwendenden Werkstoffs im Sinne der Glasfaserverstärkung eines GFK-Kunststofts. Als besonders vorteilhaft hat sich Chinagras erwiesen. Diese Pflanze ist wenig anspruchsvoll und baut in kurzen Zeiträumen eine relativ große Biomasse auf. Ihre Fasern sind außerdem relativ fest und widerstandsfähig. Vorteilhaft sind auch die in Anspruch 14 angegebenen Fasern. Es handelt sich hier um die Haare der Kapselfrüchte des in Ostindien heimischen und im ganzen Tropengürtel angebauten Kapokbaums (Ceiba Pentandra). Der Vorteil der Kapokhaare besteht vor allen Dingen dann, daß sie seht leicht, hit-zebständig und schwer benetzbar sind. Sie eignen sich deshalb vor allen Dingen für solche Werkstoffe, die in warmer und feuchter Umgebung eingesetzt werden sollen. Als Faserstoffe können weiterhin Holzfasern und zerkleinerte Altkleider eingesetzt werden. Letztere natürlich vorzugsweise dann, wenn sie biologisch abbaubaren Fasern, also vorzugsweise Wolle- und Baumwollfasern, bestehen.

Die Maßnahme nach Anspruch 17 hat den Zweck, die Fließ- und Gleitfähigkeit der erfindungsgemäß zu verwendenden Werkstoffs z.B. bei der Verarbeitung im Spritzgußverfahren zu erhöhen. Vor allem Alkohole, z.B. Hexylenglykol unterstützen die Verflüssigung der natürlichen Harze, in dem sie diese anlösen.

Da die natürlichen Rohstoffe beispielsweise im Falle von Faserstoffen in einer relativ groben Korngröße im Werkstoff bzw. der Zusammensetzung vorliegen, kann es vorteilhaft sein, einen Zuschlagsstoff mit kleinerer Korngröße zuzugeben. Dieser wirkt quasi als "Zwischenfüllstoff" und verhindert beispielsweise bei der Verarbeitung im Spritzgußverfahren, daß Auftreten von Hohlräumen. Als besonders geeignet für diesen Zweck hat sich Zellulosepulver (Anspruch 18) herausgestellt. Ganz allgemein gilt, daß zur Herstellung von Gegenständen, bei denen keine grobkömigen Einschüsse sichtbar sein sollen die Naturprodukte sehr fein gemahlen und gegebenenfalls von den grobkörnigeren Bestandteilen, etwa der Kleie oder den Spelzen von Getreidekömem, befreit werden. Die mit solchen Zusammensetzungen hergestellten Gegenstände weisen eine glatte und homogen erscheinende Oberfläche auf.

Im Falle von Formteilen, deren Oberfläche einer verstärkten mechanischen Belastung ausgesetzt ist, ist es vorteilhaft, ein Hartharz gemäß den Ansprüchen 19 und 20 zuzusetzen. Es wird dadurch eine glatte und harte Oberfläche erreicht. Die Oberflächengüte spielt auch dann eine Rolle, wenn Formteile mit einer Beschichtung, etwa einer mit Schaumstoff hinterfütterten Lederbeschichtung, beispielsweise für Innenauskleidungen von Automobilen, versehen werden sollen. Eine glatte, harte Oberfläche spielt in diesem Fall auch bei der Trennung der Beschichtung von dem aus einem erfindungsgemäßen Werkstoff bestehenden Grundkörper eine Rolle, da dies um so leichter möglich ist, je härter und glatter dessen Oberfläche ist. Als Hartharze können beispielsweise Zink- oder Calciumresinate eingesetzt werden. Eine slatte und harte Oberfläche ist auch dann anzustreben, wenn die Gegenstände, wie etwa Spielzeuge, nicht verkleidet sondern lackiert werden sollen.

Durch die Maßnahme der Ansprüche 21 und 22 wird das in den pflanzlichen oder auch tierischen Bestandteilen des erfindungsgemäß zu verwendenden Werkstoffs enthaltene Wasser gebunden.Dies hat den Vorteil, daß beispielsweise bei der Verarbeitung der Werkstoffmasse in einem Extruder die Entwicklung von Wasserdampf verringert oder ganz unterdrückt ist.

Die Zugabe von Gesteinspulvern, z.B. von Schieferpulver gemäß Anspruch 23 bewirkt eine Erhöhung der Härte, der Dichte, der Biegefestigkeit und der Schlagfestigkeit der Werkstoffe. Vorteilhaft ist weiterhin, daß Abriebfestigkeit erhöht und die Lackierbarkeit der Werkstoffoberfläche verbessert wird. In den weiteren Ansprüchen 24 bis 26 sind vorteilhafte Zusammensetzungen.

Die Erfindung wird nun anhand von Beispielen näher erläutert.

| Beispiel 1: | |
|---|---|
| Kaurikopal-Granulat | 25 kg |
| Weizen, grob gemahlen | 26 kg |
| Hafer, grob gemahlen | 15,8 kg |
| Sojaschrot | 10 kg |
| Maisschrot | 10 kg |
| Chinagras, gehäckselt | 10 kg |
| Rohzellulose | 1,6 kg |
| Hexylenglykol | 0,9 kg |
| Zink-Resinat: | 0,7 kg |

Die Rohzellulose weist Partikelgrößen im Bereich von etwa 20 pm bis 40 pm und ein Schüttgewicht von 100 g/l bis 150 g/l auf. Derartige natürliche Rohzellulosen sind beispielsweise unter dem Handelsnamen Lignoflok® erhältlich. Verschiedene Kopale, wie Kaurikopal oder Manila-Kopal werden beispielsweise von der BASF vertrieben. Bei dem verwendeten Getreide kann es sich auch um Lagerbestände handeln, die aus Gründen der Überproduktion oder aufgrund von Lagerschäden nicht mehr in den Handel gelangen können.

Neben Chinagras können praktisch alle Gräser verwendet werden, deren Blattspreiten und Stengel faserartige Versteifungen aufweisen. Hier sind insbesondere langfaserige Pflanzen wie Teichgräser, Schilfarten oder Manilahanf, der aus Musa textilis (Faserbanane), gewonnen wird, zu nennen. Insbesondere die Blattfasern der Faserbanane sind fest,zäh, leicht und witterungsbeständig.

Geeignete Zink-Resinate werden beispielsweise unter dem Handelsnamen Erkazit von den Lackharzwerken Robert Krämer GmbH & Co, 2800 Bremen, vertrieben. Neben Zink-Resinaten können auch Ca-Resinate verwendet werden, die wegen ihrer besseren Umweltverträglichkeit vorzuziehen sind.

Zur erfindungsgemäßen Herstellung eines Spritzguß-Formteiles aus dem Werkstoff gemäß Beispiel 1 kann wie folgt verfahren werden.

Die getrockneten Ausgangsstoffe werden zusammen oder jeder für sich in einer geeigneten Mühle bis zur gewünschten Korngröße granuliert oder pulverisiert und anschließend in einem Mischer unter Hinzufügung des Weichmachers Hexylenglykol und dem Zn-Resinat innig vermischt. Das so entstandene rieselfähige Granulat oder Pulver kann mit herkömmlichen Spritzuß-, Extrudier-, Blasform- oder Formpreßverfahren zu beliebigen Formteilen verarbeitet werden. Bei den genannten Verarbeitungstemperaturen kommt es zu einer Gelatinierung der Stärke und des Soja-Eiweißes und zu einer Plastifizierung der Masse.

Aus der Zusammensetzung nach Beispiel 1 können z.B. folgende Gegenstände hergestellt werden: Verpackungen, wie etwa thermoverformte Teile mit Waben, geschäumte Verpackungen und Blister durch Breitschlitzdüsen-Extrusion, Ohrpflegestäbchen und Pflanztöpfe durch Warmverformung und Wellprofile für Verpackungen durch Profilextrusion.

Mit dem o.g. Werkstoff wurden Sitz-Rückenschalen für Auto-Sitze im Spritzgußverfahren hergestellt. Es wurden dazu Spritzgußmaschinen im Größenbereich etwa von 80 bis 2000 Tonnen verwendet, Die Verarbeitungstemperatur in den Spritzgußmaschinen betrug etwa 230°C, die Wandtemperatur der Spritzgußform lag zwischen etwa 25°C und 30°C. Mit diesen Formteilen wurden Versuche und Testreihen durchgeführt, die im folgenden im einzelnen erläutert werden:

### Klimawechseltest nach VW-Prüfvorschrift 1200:

Es wurden acht Zyklen mit je 4 Stunden bei - 40°C und 4 Stunden bei 80°C und einer relativen Luftfeuchtigkeit von 80 % durchlaufen. Zum Vergleich wurden parallel zwei Sitzschalen aus ABS (Lustran und Novodur) getestet. Das Ergebni war, daß signifikante Veränderungen weder bei dem erfindungsgemäß verwendeten Werkstoff noch bei den ABS-Kunststoffen aufgetreten sind. Insbesondere war kein Verzug der Formteile erkennbar.

### Klimaprüfung nach VW-Prüfvorschrift 1211:

Es wurden Automobil-Sitzschalen und Armaturen einsätze geprüft. Nach Versuchsende wurden die Proben in Augenschein genommen. An den Proben zeigten sich weder Verzug, Rißbildung, Blasenablösungen oder Fleckenbildungen. Auch bei diesen Test wurden Vergleichsproben aus ABS-Kunststoff dem gleichen Test unterzogen. Es war auch hier kein signifikanter Unterschied zu den herkömmlichen Kunststoffen feststellbar.

Mit der Zusammensetzung nach Beispiel 1 wurde das Verhalten der Viskosität als Funktion der Fließgeschwindigkeit ermittelt. Das Ergebnis ist in Diagramm 2 graphisch dargestellt. Danach zeigt der erfindungsgemäße Werkstoff im Bereich einer chearrate >12 s⁻¹ zeigt der Werkstoff das klassische Verhalten der thermoplastischen Polymere (Modell der pseudoplastischen oder plastischen Flüssigkeit nach Bingham). Bei dem erfindungsgemäßen Werkstoff nimmt die Viskosität schneller ab, als bei Polyolifinen. Dieses Verhalten verbessert die Verarbeitungseigenschaften des Polymers bei hohen Geschwindigkeiten. Hinzu kommt noch, daß beim extrudieren der erfindungsgemäßen Werkstoffe der sog. Schmelzbruch (melt fracture) auch bei extrem hohen Geschwindigkeiten nicht auftritt.

Im Bereich einer chearrate von <12 s⁻¹ verändert sich das reologische Verhalten allmählich, um bei abnehmender Fließgeschwindigkeit eine schnell ansteigende Viskosität anzunehmen (Modell der thixotropischen Flüssigkeiten). Dieses Verhalten läßt sich mit der an wasserstoffbrückenreichen makromolekularen Struktur des erfindungsgemäßen Werkstoffes erklären. Diese Bindungen bilden bei abnehmender Geschwindigkeit zunehmend eine Art vernetzter Struktur, die ihren höchsten Fließwiderstand bei Geschwindigkeiten nahe Null erreicht.

Eine herausragende Eigenschaft der erfindungsgemäß verwendeten Zusammensetzung bzw. der damit hergestellten Werkstoffe ist ihre biologische Abbaubarkeit. Während sich herkömmliche Kunststoffe, je nach Art, sich unter dem Einfluß von Temperatur, Licht und gegebenenfalls Mikroorganismen innerhalb nur sehr langer Zeiträume (Jahrzehnte bis Jahrhunderte) merklich zersetzen, werden die erfindungsgemäßen Werkstoffe innerhalb weniger Wochen zu einem Großteil abgebaut, Um die biologische Abbaubarkeit der beanspruchten Werkstoffe zu belegen, wurden vier verschiedene Tests durchgeführt, die im folgenden beschrieben werden sollen:

### Sturm-Methode:

Nach diesem Testverfahren wurde ein biologisch aktives Substrat und ein Werkstoff mit einer Zusammensetzung nach Beispiel 1 vermischt. Der Werkstoff wurde bis zu einer Körnung von unter 100 µm zermahlen. Das biologisch aktive Substrat bestand aus Klärschlamm, Oberflächenwasser und Ackerboden. Die Mischung aus pulverisiertem Werkstoff und biologisch aktivem Substrat wurde in ein geschlosses Gefäß mit Wasser gegeben, durchmischt und bei 20 bis 25 °C mit einer kontrollierten Menge CO₂-freier Luft begast. Als Gegenprobe wurde eine entsprechende Menge des biologisch aktiven Substrats unter sonst gleichen Bedingungen begast.

Das entstandene Kohlendioxid wurde durch Bariumhydroxid-Lösung geleitet und als Barium-Carbonat abgetrennt. Aus der abgetrennten Barium-Carbonat-Menge wurde das entstandene Kohlendioxid bestimmt und mit der theoretisch möglichen Kohlendioxid-Menge verglichen.

Zum Vergleich wurden Fotokopierpapier und Tütenpapier dem selben Test unterworfen. Das Test-Ergebnis ist in Diagramm 1 graphisch dargestellt. Daraus geht hervor, daß der Abbau der erfindungsgemäßen Werkstoffe nur unbedeutend langsamer verläuft, wie der von holzhaltigem Tütenpapier. Nach etwa 60 Tage ist bereits 40 % der enthaltenen Kohlenstoffmenge in Kohlendioxid umgesetzt. Nach 310 Tagen ist dieser Wert auf 78,5 % angestiegen. Der anfangs steile und dann flacher werdende Kurvenverlauf ist dadurch erklärbar, daß zunächst bevorzugt die Naturprodukte und erst dann die polymeren Harzbestandteile abgebaut werden. Nach 310 Tagen beträgt die Mineralisierung bezogen auf das Ausgangsgewicht 91 %. Zu diesem Zeitpunkt ist also bereits ein Großteil des mit 33 % in der Ausgangsmischung vorhandenen Kaurikopals abgebaut. Ein entsprechender Versuch wurde auch unter anaeroben Bedingungen durchgeführt. Die Proben wurden in diesem Fall nicht mit Luft begast, sondern unter anaeroben Bedingungen gehalten. Es wurden ebenfalls Vergleichstests mit den o.g. Papieren durchgeführt. Es hat sich gezeigt, daß die erfindungsgemäß verwendeten Werkstoffe auch unter anaeroben Bedingungen gut biologisch abbaubar sind.

### SCAS-Verfahren (Semi Continuous Activated Sludge):

In jeweils 25-1-Behältern wurden Proben verschiedener erfindungsgemäßer (Proben 1-4 mit Zusammensetzungen gem. den Beispielen 1-4) Werkstoffe bei 20 bis 25 °C einer biologisch aktiven Lösung ausgesetzt. Diese Lösung wurde täglich mit Peptonlösung und den in den jeweiligen Werkstoffen enthaltenen Einzelsubstanzen versetzt. Zur Aufrechterhaltung aerober Abbaubedingungen wurden die Behälter mit Luft begast. Parallel zur aeroben Versuchsreihe wurden entsprchende Versuche unter anaeroben Bedingungen bei 35°C durchgeführt. Der Fortschritt des biologischen Abbaus wurde durch Kontrolle des Gewichtsverlusts und durch in Augenscheinnahme unter der Mikroskop festgestellt. Die Versuchsergebnisse gehen aus der Tabelle 1 hervor. Bei den aeroben Versuchsreihen wurden nach einer Dauer von 86 Tagen zwischen 21 % und 47 % Gewichtsverlust festgestellt. Bei der anaeroben Methode schwankte der Gewichtsverlust nach einer nur 50-tägigen Versuchsdauer zwischen 39 % und 49 %. Zum Vergleich wurde ein Zelluloseazetat-Film einem aeroben Abbau unter denselben Bedingungen unterzogen. Der Gewichtsverlust nach 231 Tagen betrug nur 15,9 %.

### Eingrabungs-Verfahren (Soilburial-Test):

Bei diesem Verfahren wurde ein Werkstück mit einer Zusammensetzung gemäß Beispiel 1 in einem Gewächshaus bei 30°C und 55 % relativer Luftfeuchtigkeit 5 cm tief in Ackererde eingegraben. Die Erde wurde in regelmäßigen Abständen angefeuchtet. Der Fortgang des biologischen Abbaus wurde durch Messung des Gewichtsverlusts der Probe bestimmt. Als Ergebnis zeigte sich, daß nach 7 Tagen bereits ein 40 %iger und nach 49 Tagen ein mehr als 55 %iger Gewichtsverlust aufgetreten war.

Die obenbeschriebenen Versuche zeigen somit eindeutig, daß die erfindungsgemäßen Werkstoffe in herkömmlichen Kompostanlagen, Biogasanlagen oder städtischen Kläranlagen, gegebenenfalls nach vorheriger Zerkleinerung, abbaubar sind.

| Beispiel 2: | |
|---|---|
| Dammar-Harz | 5,0 kg |
| Maisstärke | 3,5 kg |
| Rohzucker | 3,5 kg |
| Popkorn | 2,5 kg |
| Kartoffeln | 2,0 kg |
| Weizenmehl | 1,5 kg |
| Sojamehl | 1,0 kg |
| Kochsalz | 0,3 kg |
| Aromastoff | 2,0 kg |
| Weichmacher | 2,0 kg |

Bei diesem Beispiel wurde anstelle von Kaurikopal Dammar-Harz verwendet. Je nach den Qualitätsanforderungen des mit dieser Zusammensetzung herzustellenden Produkts kann weißer oder brauner Dammar eingesetzt werden. Der Reinheitsgrad bzw. die Qualität des verwendeten Dammar-Harzes richtet sich ebenfalls nach den Qualitätsanforderungen des späteren Produkts. Die hier eingesetzten Naturprodukte liegen generell in einer granulierten und getrockneten Form vor. Ihr Wassergehalt beträgt etwa 8-10 %. Auch die in Beispiel 1 und den weiter unten beschriebenen Beispielen verwendeten Naturprodukten liegen in dieser Ausgangsform vor.

Der Mischung wurden 0,3 kg Kochsalz zugesetzt. Dies bewirkt, daß das in den Naturprodukten vorhandene Restwasser gebunden wird. Die Ausdampfung bei der Verarbeitung der Zusammensetzung in einem Extruder ist dadurch praktisch unterbunden. Zur Verbesserung der Fließeigenschaften wurde als Weichmacher ein Gemisch aus Ethanol und Paraffin im Verhältnis 4 zu 1 beigefügt.

Die bei den üblichen Verarbeitungsmethoden herrschenden Temperaturen von 180 °C bis 230 °C bewirken in geringem Ausmaß eine Spaltung der in den Naturprodukten enthaltenen Stärkemoleküle. Der typische Geruch der entstehenden "Röst-Dextrine" kann durch Zusatz eines diesen Geruch überdeckenden oder neutralisierenden Stoffes verhindert werden, falls dies gewünscht ist. Im vorliegenden Fall wurde ein naturidentischer Flieder-Aromastoff in pulverisierter Form verwendet. Naturgemäß kann hier eine sehr breite Palette von sehr unterschiedlichen Aromastoffen Anwendung finden.

Als Anwendungsbeispiele für die Zusammensetzung nach Beispiel 2 sind etwa die folgenden, im Spritzgußverfahren hergestellten Gegenstände zu nennen: Behälter, Einweggeräte für den hygienisch-medizinischen Bereich, Bürobedarf, Kosmetikbehälter, Werbepräsente, Pflanztöpfe, Verschlüsse und Spielwaren.

| Beispiel 3: | |
|---|---|
| Kaurikopal-Harz | 1,7 kg |
| Gilsonit | 1,25 kg |
| Zuckerrohr | 1,3 kg |
| Popcorn | 1,9 kg |
| Mais | 1,1 kg |
| Sojamehl | 1,2 kg |
| Zucker | 1,5 kg |
| Aromastoff | 1,0 kg |
| Weichmacher | 1,0 kg |

Bei dieser Zusammensetzung wurde eine Mischung aus Kaurikopal-Harzen und Gilsonit verwendet. Als weiterer wesentlicher Bestandteil wurde getrocknetes und granuliertes Zuckerrohr zugesetzt. Als Aromastoff wurde Fliederaroma in Pulverform und als Weichmacher ein Gemisch Ethanol mit Paraffin im Verhältnis 4 zu 1 eingesetzt. Der Aromastoff kann aber auch entfallen, wenn beispielsweise im Motorraum von Automobilen anzubringende Formteile hergestellt werden.

Anwendungsbeispiele für diese Zusammensetzung sind durch Extrusionsformen hergestellte Gegenstände wie Behälter zur Verpackung von Trockenpulver, Behälter für Schmieröl und Behälter für Lösungsmittel auf Kohlenwasserstoffbasis.

Ein weiteres Beispiel für eine Zusammensetzung unter Verwendung von Zuckerrohr- oder Zuckerrübengranulat ist im folgenden angegeben:

| Beispiel 3a: | |
|---|---|
| Zuckerrohr- und/oder Zuckerrübengranulat | 55 % |
| Kopal | 33 % |
| Stärke | 5 % |
| Faserstoffe | Rest |

| Beispiel 4: | |
|---|---|
| Gilsonit | 7,2 kg |
| Natur-Latex | 2,3 kg |
| Stärke | 5,0 kg |
| Fasern aus Altkleidern | 10,0 kg |

Die in Beispiel 4 angegebene Zusammensetzung unterscheidet sich von den bisherigen dadurch, daß als die Elastizität erhöhender Zusatz Natur-Latex beigemengt ist. Derartige Zusammensetzungen sind vor allen Dingen zur Herstellung von Folien geeignet. Der Anteil an Natur-Latex läßt sich in relativ weiten Grenzen variieren, um die gewünschten Elastizitätseigenschaften der Folien einzustellen. Das verwendete Gilsonit hat von Natur aus eine braune bis schwarze Färbung. Sollen Folien mit einer hellen Färbung hergestellt werden, wird das Gilsonit durch ein Kopal-Harz ersetzt. Mit dieser Zusammensetzung lassen sich z.B. Behälter für ölhaltige kosmetische Artikel, Spielwaren und Folien herstellen. Wenn in den bisher und auch weiter unten beschriebenen Beispielen von Stärke die Rede ist, so kann es sich dabei auch um Stärke-Maische handeln, die beispielsweise bei der Bierherstellung als Abfallprodukt anfällt. Die Maische wird entwässert und liegt dann in Form eines Pulvers vor. Aus den in den Beispielen 1 bis 4 angegebenen Zusammensetzungen wurden Probekörper (Probe 1 = Beisp. 1, Probe 2 = Beisp. 2 usw.) hergestellt und damit die mechanischen, rheologischen und thermischen Eigenschaften getestet. Die Ergebnisses gehen aus den Tabellen 2 bis 6 hervor. In den Tabellen ist jeweils angegeben, welches Herstellungsverfahren der jeweiligen Probe zugrunde liegt.

| Beispiel 5: | |
|---|---|
| Popcorn (granuliert): | 2 kg |
| Kartoffel | 30 kg |
| Kopal | 45 kg |

| Beispiel 6: | |
|---|---|
| Sisal-Agave | 20 kg |
| Papyrus | 10 kg |
| Fasern aus Altkleidern | 10 kg |
| Kopal | 50 kg |

Die in der Rezeptur nach Beispiel 6 wie auch ein den weiter obern beschriebenen Beispielen zugesetzten Faserstoffe bewirken vor allem eine Erhöhung der Zug- und Biegefestigkeit der damit hergestellten Formteile. Die Verarbeitung der in den Beispielen 2 bis 6 genannten Ansätze kann ebenso erfolgen wie bei Beispiel 1 beschriebenen.

| Beispiel 7 | |
|---|---|
| Dextrin | 20 % |
| Casein | 7,5 % |
| Magermilchpulver | 7,5 % |
| Lab-Ferment | 7,5 % |
| Serumalbumin | 7,5 % |
| Kopal | 6 % |
| Sisal-Fasern | 15 % |
| Sojaschrot | 7 % |
| Weizenschrot | 6 % |
| Gerstenschrot | 7 % |
| Roggenschrot | 7 % |
| Paraffin | 2 % |

Es hat sich gezeigt, daß mit Eiweiß, Dextrin (oder Stärke) und Naturfasern enthaltenden Zusammensetzungen Werkstoffe erhalten werden, die sich insbesondere für die Herstellung von Einweg-Geschirr wie Teller und Becher oder auch für Verpackungen eignen. Die Ausgangsstoffe liegen in granulierter oder pulverisierter Form vor und werden mit den Naturfasern vermischt. Als Eiweiße können neben isoliertem Casein Milchpulver, Serumalbumin, auch Soja-Eiweiß, Rhizinus-Eiweiß etc. verwendet werden. Es hat sich gezeigt, daß zufriedenstellende Ergebnisse nur dann erzielt werden können, wenn in der Zusammensetzung Lab-Ferment enthalten ist. Neben den hier eingesetzten Sisal-Fasern können natürlich auch beliebige andere Fasern, vorzugsweise biologisch abbaubare, beigemischt werden.

Von einem Werkstoff mit einer Zusammensetzung gem. Beispiel 7 wurden die mechanischen, thermischen und weitere Eigenschaften untersucht. Zum Vergleich wurden dieselben Untersuchungen mit einem herkömmlichen Kunststoff (Lustran) durchgeführt. Das Ergebnis ist aus Tabelle 7 ersichtlich. Der erfindungsgemäß verwendete Werkstoff hat demnach ein Eigenschaftsprofil, daß mit jenem von Lustran, einem ABS-Copolymer, praktisch identisch ist. Abschließend sei noch bemerkt, daß die erfindungsgemäßen Werkstoffe, sofern dies die Einsatzbedingungen erfordern, fungizid und antibakteriell eingestellt werden können. Dabei werden bevorzugt solche Stoffe eingesetzt, die eine geringe Toxizität aufweisen und deren Wirksamkeit so bemessen ist, daß bei einer späteren Verrottung des Werkstoffs die biologische Zersetzung praktisch nicht behindert ist. Ebenso ist darauf zu achten, daß bei einer späteren Verbrennung keine umweltbelastenden Stoffe entstehen.

Auch ist es generell möglich zur Erhöhung der Elastizität allen erfindungsgemäßen Zusammensetzungen Latex beizumengen.

Die oben beschriebenen Beispiele und die in den Tabellen angegebenen Eigenschaften geben nur einen kleinen Teil der mit den erfindungsgemäßen Zusammensetzungen herstellbaren Werkstoffen wieder. Durch entsprechende Veränderung der Zusammensetzung kann ein breites Spektrum von Werkstoffen mit den jeweiligen Anforderungen angepaßten Eigenschaften erhalten werden. So können beispielsweise Werkstoffe von großer Festigkeit und Steifigkeit bis hin zu hoher Biegsamkeit erhalten werden.

Die erfindungsgemäß verwendeten Werkstoffe lassen sich gut einfärben, etwa mit Pigmenten. Sie weisen niedrige Schwund- und Anschwellkoeffizienten bei der Extrusion auf. Sie sind ohne Zusatz von Stabilisatoren lichtbeständig. Sie sind ebenso beständig gegenüber Ölen und organischen Lösungsmitteln. Sie sind in biologisch inaktiver Umgebung, also praktisch in den meisten Anwendungsfällen, lange Zeit beständig aber dennoch in entsprechender Umgebung schnell biologisch abbaubar. Die erfindungsgemäßen Werkstoffe entsprechen bezüglich ihres Brennverhaltens der FAR-Vorschrift (Vorschrift der Luft- und Raumfahrtindustrie).

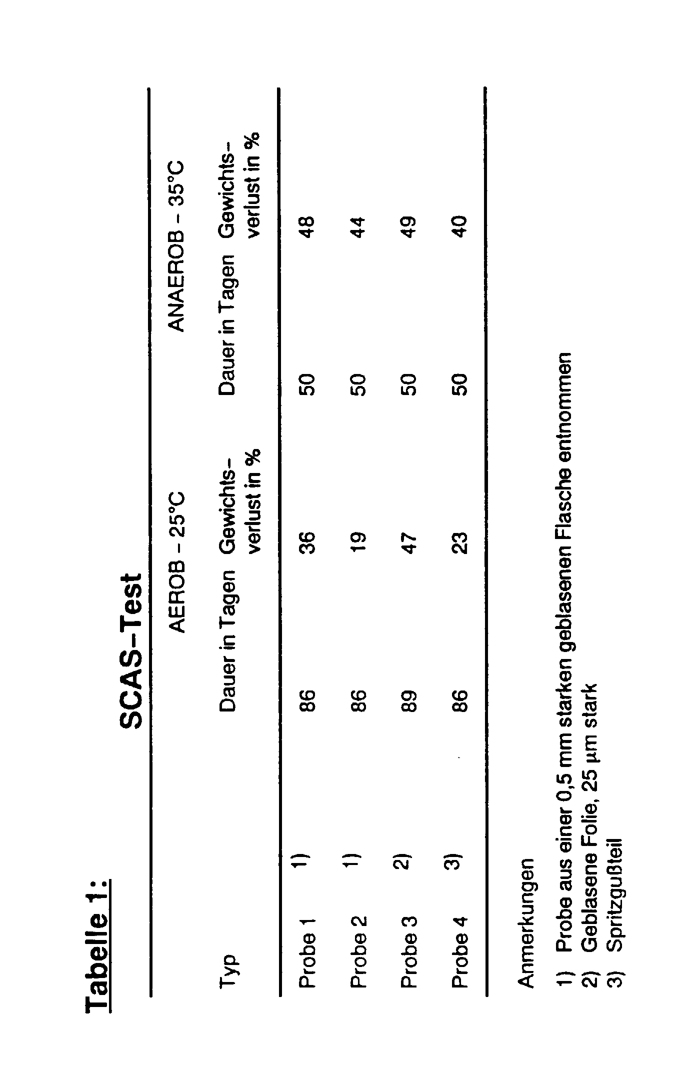

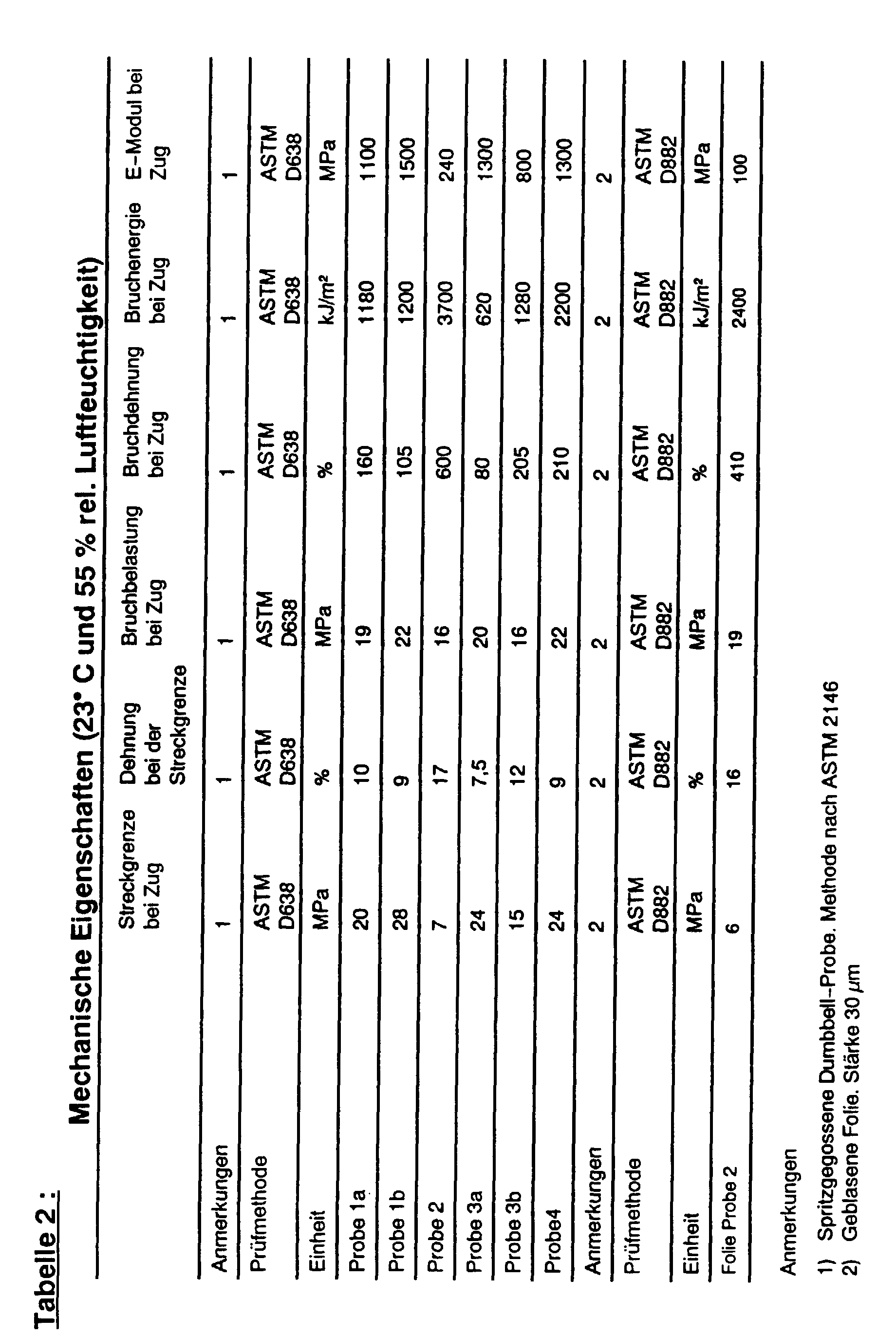

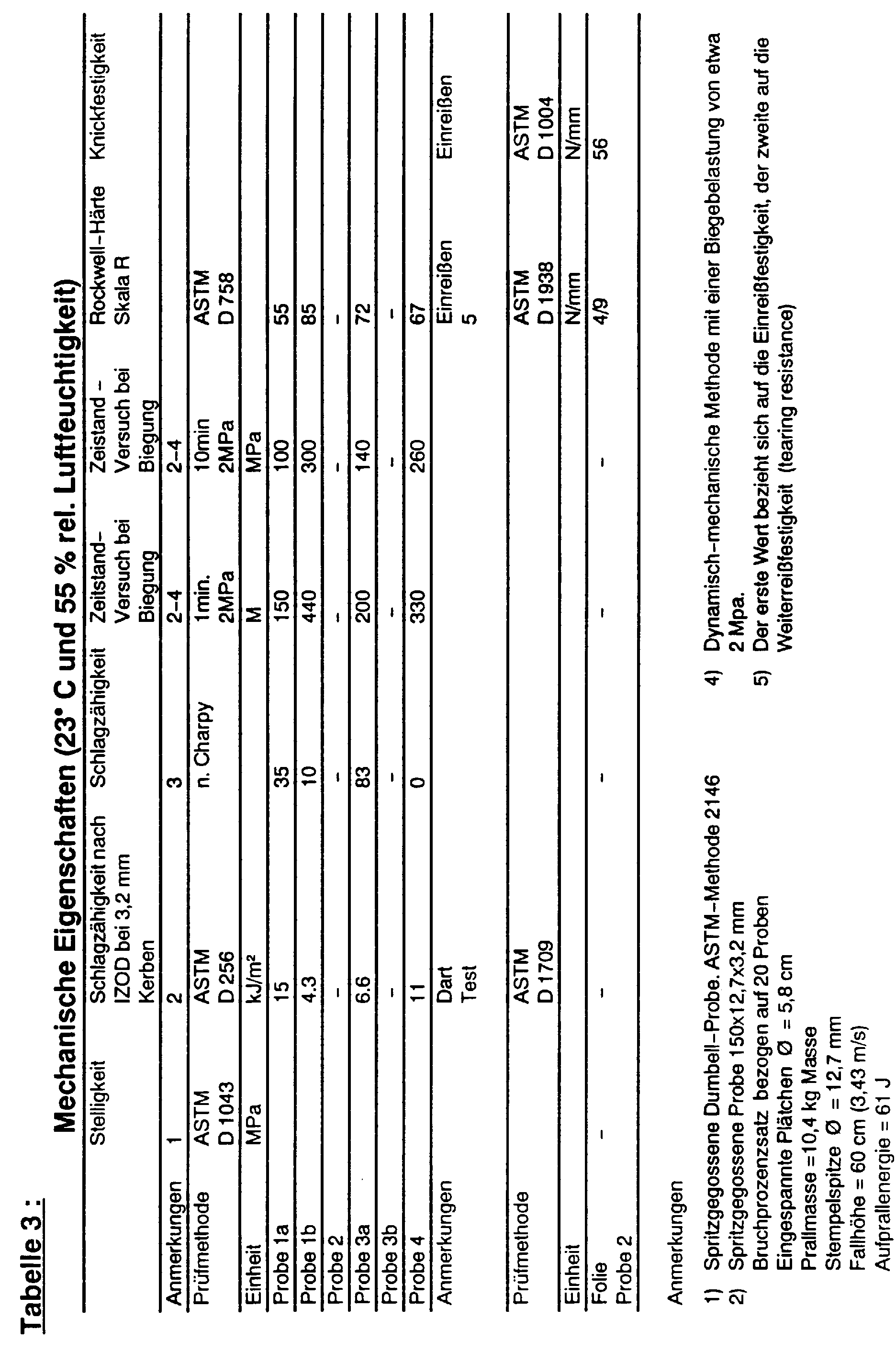

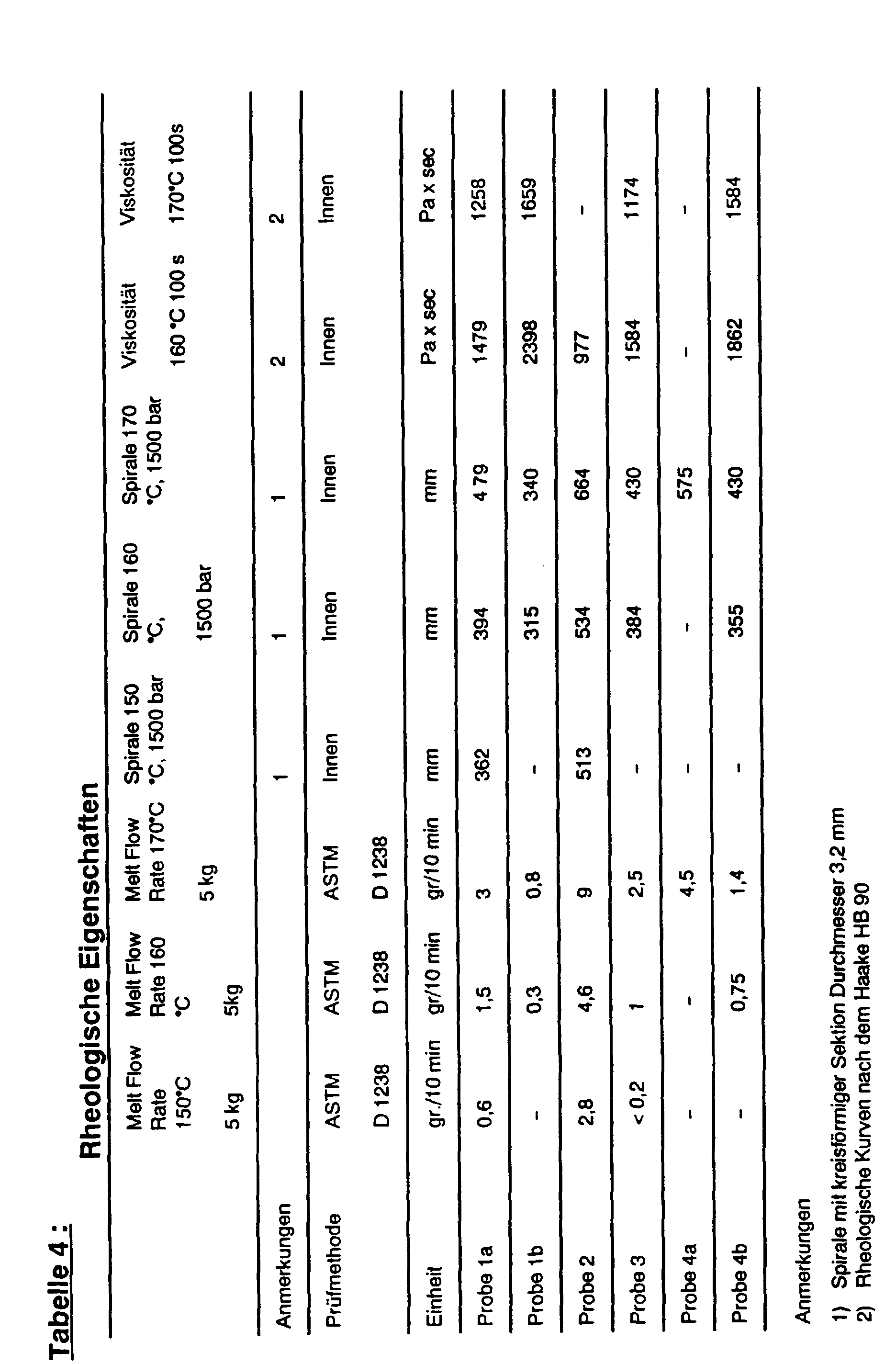

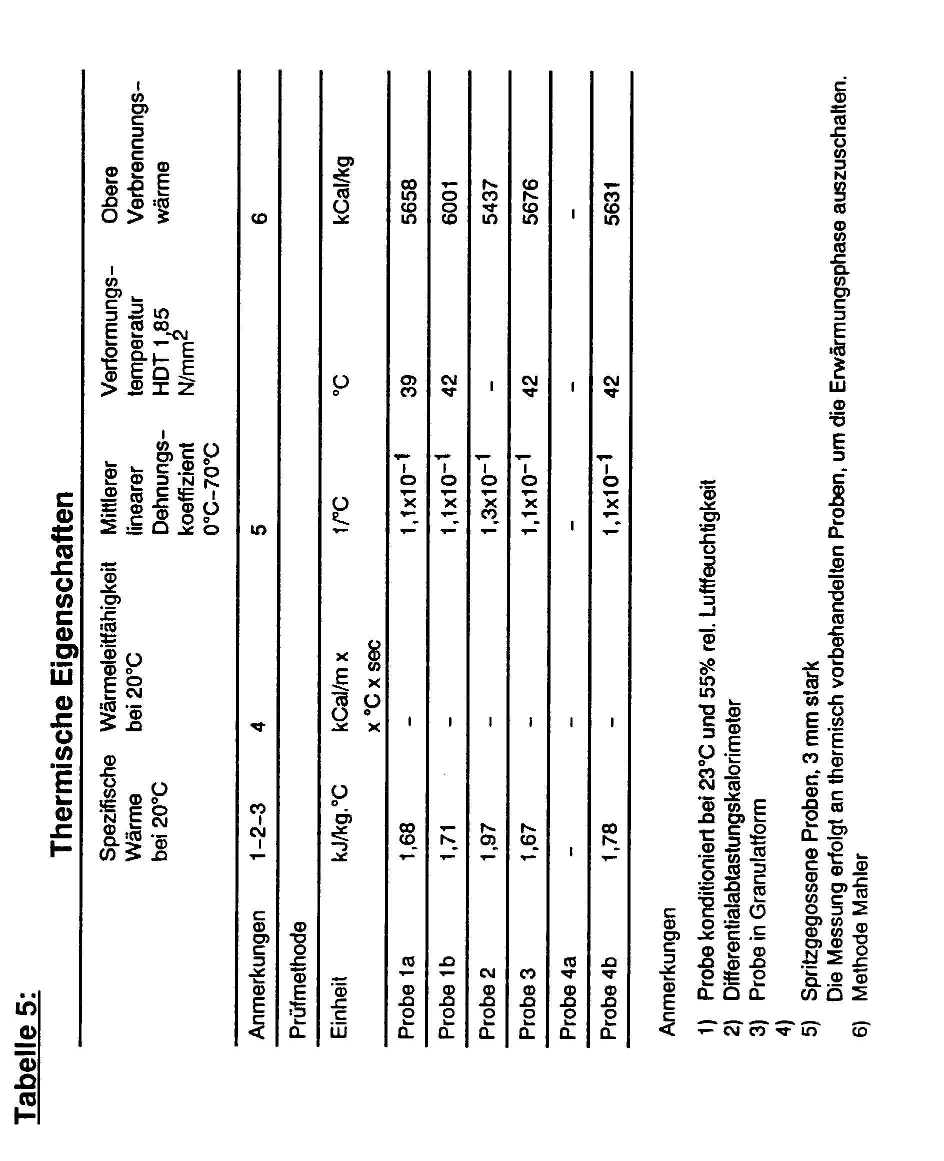

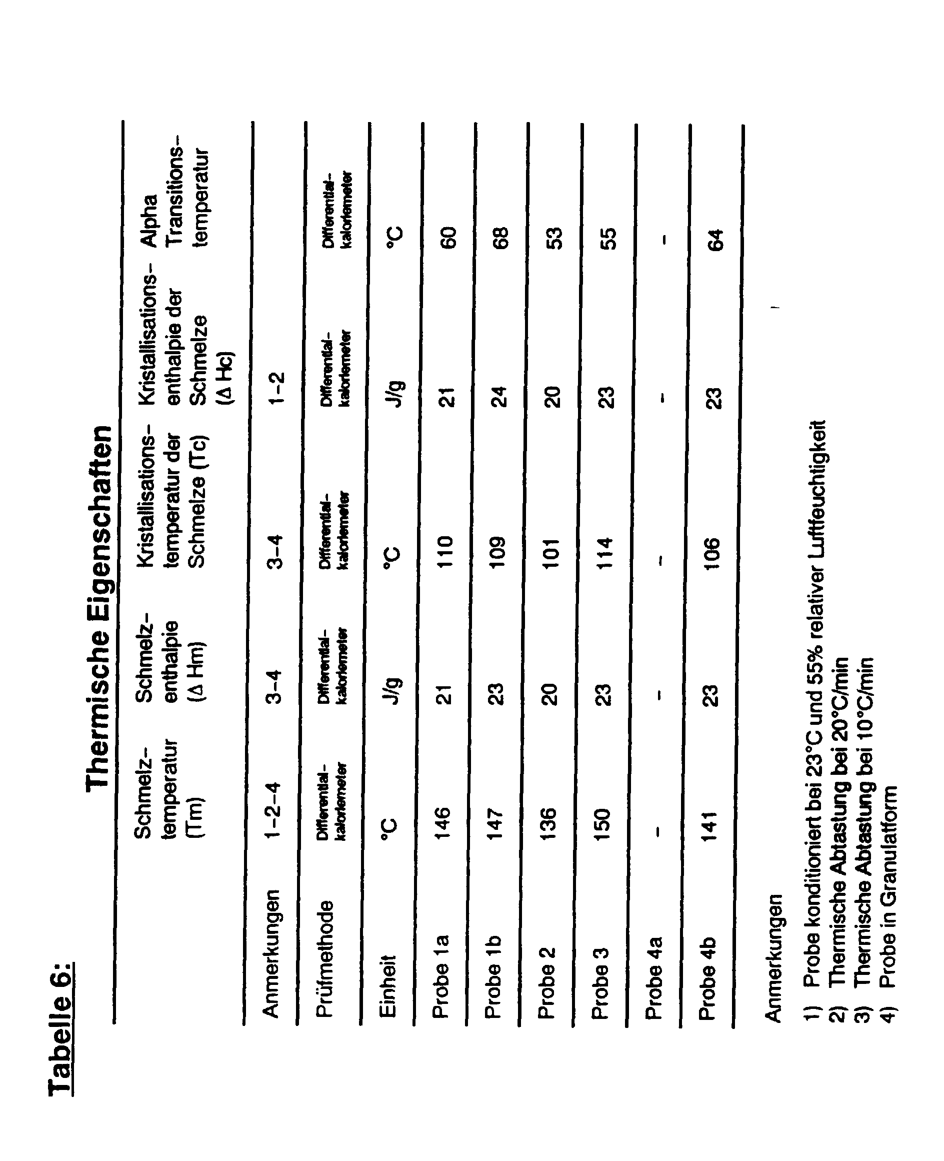

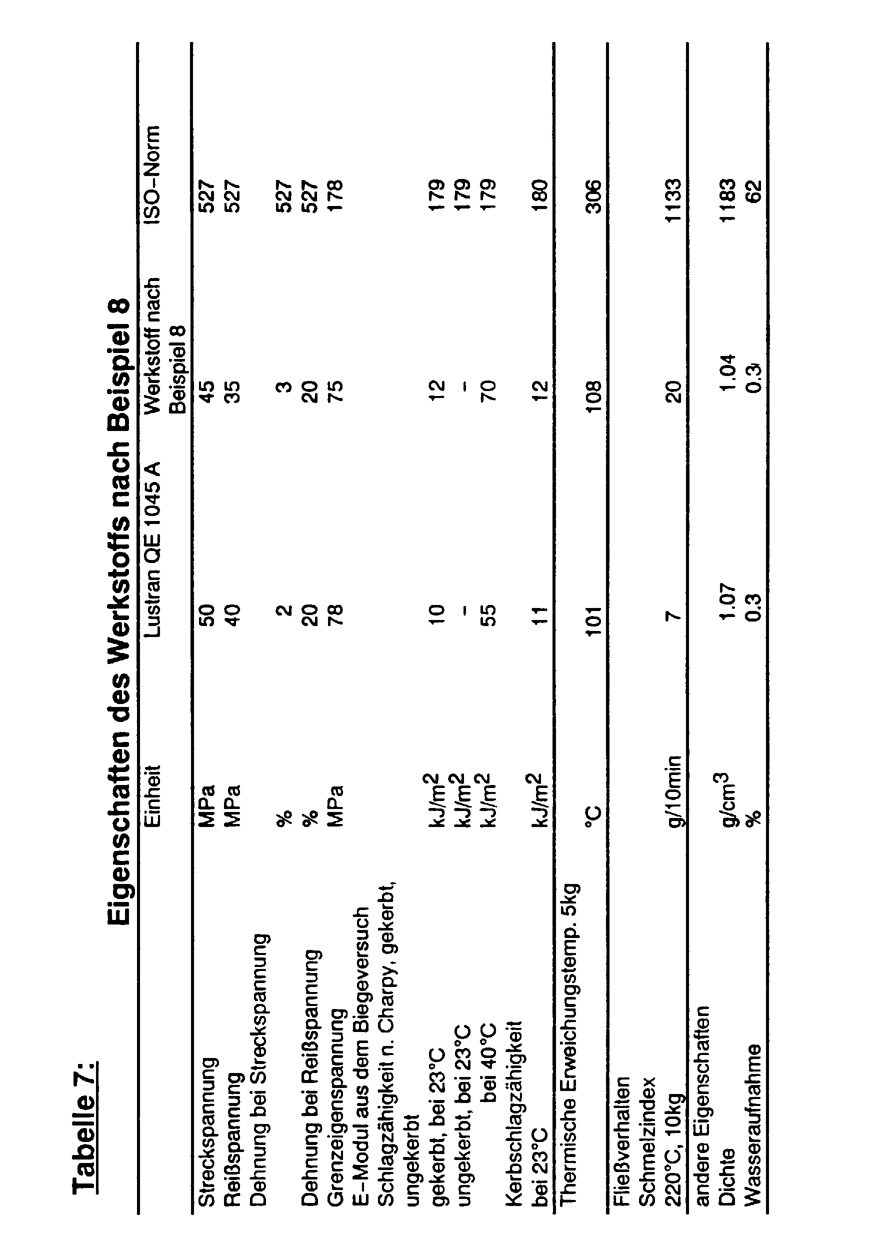

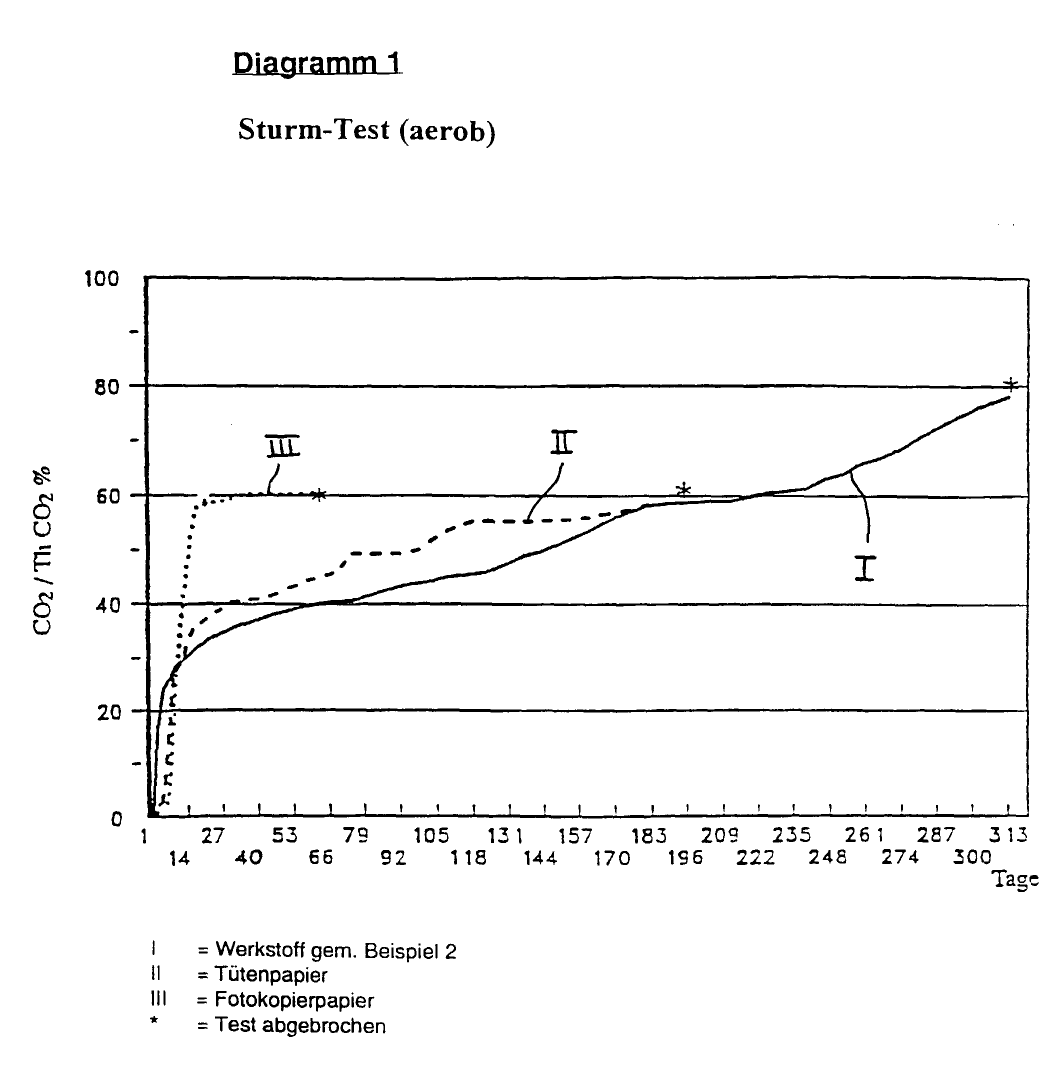

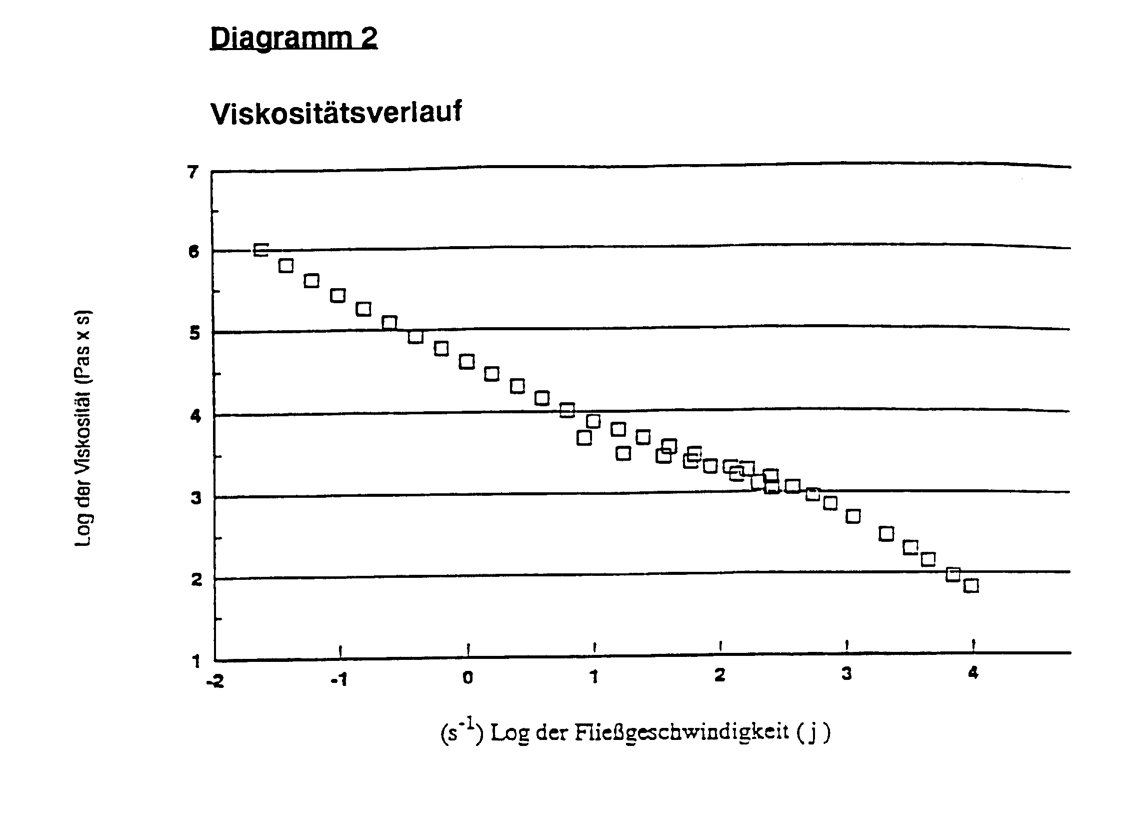

## Patentansprüche

1. Verwendung einer Zusammensetzung für einen Werkstoff mit wenigstens einem Naturharz und wenigstens einem Stärke- und/oder Eiweiß enthaltenden Naturprodukt zur Herstellung von Formteilen im Spritzgußverfahren, wobei Schellack als Naturharz ausgenommen ist.

2. Verwendung nach Anspruch 1,
dadurch gekennzeichnet,
daß das Naturprodukt aus gemahlenen oder geschroteten Samenkörnern besteht.

3. Verwendung nach Anspruch 1 oder 2,
dadurch gekennzeichnet,
daß Popcorn enthalten ist.

4. Verwendung nach Anspruch 1, 2 oder 3
dadurch gekennzeichnet,
daß Kartoffelmehl enthalten ist.

5. Verwendung nach einem der Ansprüche 1 bis 4,
dadurch gekennzeichnet,
daß Holzmehl enthalten ist.

6. Verwendung nach einem oder mehreren der Ansprüche 1 bis 5,
dadurch gekennzeichnet,
daß als Naturharz Kopal und/oder Dammar enthalten ist.

7. Verwendung nach einem oder mehreren der Ansprüche 1 bis 6,
dadurch gekennzeichnet,
daß als Naturharz enthaltender Bestandteil Gilsonit enthalten ist.

8. Verwendung nach einem oder mehreren der Ansprüche 1 bis 7,
dadurch gekennzeichnet,
daß getrocknete und zerkleinerte Zuckerrüben, Zuckerrohr und/oder Zucker enthalten sind.

9. Verwendung nach einem oder mehreren der Ansprüche 1 bis 8,
dadurch gekennzeichnet,
daß Naturlatex enthalten ist.

10. Verwendung nach einem oder mehreren der vorgenannten Ansprüche
dadurch gekennzeichnet,
daß Stärke und/oder Dextrin sowie pflanzliches und/oder tierisches Eiweiß enthalten sind.

11. Verwendung nach Anspruch 10,
dadurch gekennzeichnet,
daß als Eiweiß enthaltende Bestandteile Milchpulver, Sojaeiweiß, Rhizinuseiweiß und/oder Serumalbumin und zusätzlich Labferment enthalten sind.

12. Verwendung nach einem oder mehreren der Ansprüche 1 bis 11,
dadurch gekennzeichnet,
daß natürliche bzw. biologisch abbaubare Faserstoffe enthalten sind.

13. Verwendung nach Anspruch 12,
dadurch gekennzeichnet,
daß die Fasern aus Chinagras gewonnen sind.

14. Verwendung nach Anspruch 12,
dadurch gekennzeichnet,
daß die Fasern aus den Kapselfrüchten des Kapok-Baumes gewonnen sind.

15. Verwendung nach Anspruch 12,
dadurch gekennzeichnet,
daß die Fasern Holzfasern sind.

16. Verwendung nach Anspruch 12,
dadurch gekennzeichnet,
daß die Fasern aus Altkleidern stammen.

17. Verwendung nach einem oder mehreren der Ansprüche 1 bis 16,
dadurch gekennzeichnet,
daß als Weichmacher Alkohole, Öle und/oder Paraffine enthalten sind.

18. Verwendung nach einem oder mehreren der Ansprüche 1 bis 17,
dadurch gekennzeichnet,
daß als Füllstoff Zellulosepulver enthalten ist.

19. Verwendung nach einem oder mehreren der Ansprüche 1 bis 18,
dadurch gekennzeichnet,
daß ein Hartharz enthalten ist.

20. Verwendung nach Anspruch 19,
dadurch gekennzeichnet,
daß das Hartharz ein Zink- oder Calciumresinat ist.

21. Verwendung nach einem oder mehreren der Ansprüche 1 bis 20,
dadurch gekennzeichnet,
daß ein wasserbindendes Mittel enthalter ist.

22. Verwendung nach Anspruch 21,
dadurch gekennzeichnet,
daß das wasserentziehende Mittel Kochsalz ist.

23. Verwendung nach einem oder mehrerer der vorgenannten Ansprüche,
dadurch gekennzeichnet,
daß ein Gesteinsmehl enthalten ist.

24. Verwendung nach einem oder mehreren der vorgenannten Ansprüche,
gekennzeichnet durch
folgende, aus Naturstoffen und natürlichen Harzen bestehende Grundzusammensetzung (Gew.%):
| | |
|---|---|
| Kopal und/oder Damar | 10 % - 50 % |
| Naturstoffe | 50 % - 90 % |
wobei unter Naturstoffe Stärke und/oder Eiweiß enthaltende Naturprodukte, isolierte Stärke und Eiweiße und Faserstoffe zu verstehen sind und wobei dieser Grundmasse weitere in den vorgenannten Ansprüchen angegebene Stoffe hinzufügbar sind.

25. Verwendung nach einem oder mehreren der vorgenannten Ansprüche,
gekennzeichnet durch
folgende Zusammensetzung (Gew.%):
| | |
|---|---|
| Kaurikopal-Granulat | 15 % - 40 % |
| Weizen | 10 % - 50 % |
| Hafer | 8 % - 30 % |
| Mais | 5% - 20% |
| Soja | 5 % - 20 % |
| Chinagras | 5% - 20% |
| Zellulose-Pulver | 0,5 % - 8 % |
| Zink-Resinat | 0,5 % - 10 % |
| Hexylenglykol | 0,2 % - 20% |

## Claims

1. Use of a formulation for a material with at least one natural resin and at least one starch- and or protein-containing natural product for producing injection mouldings, where the natural resin is not shellac.

2. Use according to Claim 1, characterized in that the natural product consists of milled or crushed seed grain.

3. Use according to Claim 1 or 2, characterized in that the formulation contains popcorn.

4. Use according to Claims 1, 2 or 3, characterized in that the formulation contains potato flour.

5. Use according to one of Claims 1 to 4, characterized in that the formulation contains wood flour.

6. Use according to one or more of Claims 1 to 5, characterized in that the formulation contains, as natural resin, copal and/or dammar.

7. Use according to one or more of Claims 1 to 6, characterized in that the formulation contains, as constituent containing natural resin, gilsonite.

8. Use according to one or more of Claims 1 to 7, characterized in that the formulation contains dried and comminuted sugar beet, sugar cane and/or sugar.

9. Use according to one or more of Claims 1 to 8, characterized in that the formulation contains natural latex.

10. Use according to one or more of the foregoing claims, characterized in that the formulation contains starch and/or dextrin and vegetable and/or animal protein.

11. Use according to Claim 10, characterized in that the formulation contains, as protein-containing constituents, milk powder, soya protein, Ricinus protein and/or serum albumen and, in addition, rennet.

12. Use according to one or more of Claims 1 to 11, characterized in that the formulation contains natural and/or biodegradable fibrous materials.

13. Use according to Claim 12, characterized in that the fibres are obtained from China grass.

14. Use according to Claim 12, characterized in that the fibres are obtained from the fruit capsules of the kapok tree.

15. Use according to Claim 12, characterized in that the fibres are wood fibres.

16. Use according to Claim 12, characterized in that the fibres are derived from clothing waste.

17. Use according to one or more of Claims 1 to 16, characterized in that the formulation contains, as plasticizers, alcohols, oils and/or paraffins.

18. Use according to one or more of Claims 1 to 17, characterized in that the formulation contains, as filler, cellulose powder.

19. Use according to one or more of Claims 1 to 18, characterized in that the formulation contains a hard resin.

20. Use according to Claim 19, characterized in that the hard resin is a zinc resinate or calcium resinate.

21. Use according to one or more of Claims 1 to 20, characterized in that the formulation contains an agent which binds water.

22. Use according to Claim 21, characterized in that the agent which removes water is common salt.

23. Use according to one or more of the foregoing claims, characterized in that the formulation contains a rock flour.

24. Use according to one or more of the foregoing claims, characterized by the following basic formulation consisting of natural materials and natural resins (% by weight):
| | |
|---|---|
| Copal and/or dammar | from 10 to 50 % |
| Natural materials | from 50 to 90 % |
where the term natural materials is taken to mean starch-and/or protein-containing natural products, isolated starch and proteins and fibrous materials, and where other substances given in the foregoing claims may be added to this basic composition.

25. Use according to one or more of the foregoing claims, characterized by the following formulation (% by weight):
| | |
|---|---|
| Granulated kauri copal | from 15 to 40 % |
| Wheat | from 10 to 50 % |
| Oats | from 8 to 30 % |
| Maize | from 5 to 20 % |
| Soya | from 5 to 20 % |
| China grass | from 5 to 20 % |
| Cellulose powder | from 0.5 to 8 % |
| Zinc resinate | from 0.5 to 10 % |
| Hexylene glycol | from 0.2 to 20 % |

## Revendications

1. Utilisation d'une composition pour un matériau avec au moins une résine naturelle et au moins un produit naturel contenant de l'amidon et/ou de l'albumine pour la préparation de parties moulées dans un procédé de moulage par injection, la gomme-laque étant exclue comme résine naturelle.

2. Utilisation selon la revendication 1, caractérisée en ce que le produit naturel est constitué de graines moulues ou broyées.

3. Utilisation selon la revendication 1 ou 2, caractérisée en ce qu'elle contient du pop-corn.

4. Utilisation selon la revendication 1, 2 ou 3, caractérisée en ce qu'elle contient de la fécule de pomme de terre.

5. Utilisation selon l'une quelconque des revendications 1 à 4, caractérisé en ce qu'elle contient de la farine de bois.

6. Utilisation selon l'une ou plusieurs quelconques des revendications 1 à 5, caractérisée en ce qu'elle contient comme résine naturelle du copal et/ou du dammar.

7. Utilisation selon l'une ou plusieurs quelconques des revendications 1 à 6, caractérisée en ce qu'elle contient de la gilsonite comme constituant contenant de la résine naturelle.

8. Utilisation selon l'une ou plusieurs quelconques des revendications 1 à 7, caractérisée en ce qu'elle contient des betteraves à sucre, de la canne à sucre et/ou du sucre séchés et broyés.

9. Utilisation selon l'une ou plusieurs quelconques des revendications 1 à 8, caractérisée en ce qu'elle contient du latex naturel.

10. Utilisation selon l'une ou plusieurs quelconques des revendications précédentes, caractérisée en ce qu'elle contient de l'amidon et/ou de la dextrine ainsi que de l'albumine végétale et/ou animale.

11. Utilisation selon la revendication 10, caractérisée en ce qu'elle contient comme constituants contenant de l'albumine, de la poudre de lait, de l'albumine de soja, de l'albumine de ricin et/ou de la sérumalbumine et en outre un labferment.

12. Utilisation selon l'une ou plusieurs quelconques des revendications 1 à 11, caractérisée en ce qu'elle contient des matières fibreuses naturelles respectivement biologiquement dégradables.

13. Utilisation selon la revendication 12, caractérisée en ce que les fibres sont produites à partir de ramie.

14. Utilisation selon la revendication 12, caractérisée en ce que les fibres sont produites à partir des capsules de fruits du kapokier.

15. Utilisation selon la revendication 12, caractérisée en ce que les fibres sont des fibres de bois.

16. Utilisation selon la revendication 12, caractérisée en ce que les fibres proviennent de vêtements usés.

17. Utilisation selon l'une ou plusieurs quelconques des revendications 1 à 16, caractérisée en ce qu'elle contient comme assouplissant des alcools, des huiles et/ou des paraffines.

18. Utilisation selon l'une ou plusieurs quelconques des revendications 1 à 17, caractérisée en ce qu'elle contient comme charge de la poudre de cellulose.

19. Utilisation selon l'une ou plusieurs quelconques des revendications 1 à 18, caractérisée en ce qu'elle contient une résine dure.

20. Utilisation selon la revendication 19, caractérisée en ce que la résine dure est un résinate de zinc ou de calcium.

21. Utilisation selon l'une ou plusieurs quelconques des revendications 1 à 20, caractérisée en ce qu'elle contient un agent qui fixe l'eau.

22. Utilisation selon la revendication 21, caractérisée en ce que l'agent prélevant l'eau est le chlorure de sodium.

23. Utilisation selon l'une ou plusieurs quelconques des revendications précédentes, caractérisée en ce qu'elle contient une poudre de friction.

24. Utilisation selon l'une ou plusieurs quelconques des revendications précédentes, caractérisée par les compositions de base constituées de matières naturelles et de résines naturelles suivantes (% en poids):
| | |
|---|---|
| copal et/ou dammar | 10% - 50% |
| matières naturelles | 50% - 90% |
devant être compris sous le terme matières naturelles des produits naturels contenant de l'amidon et/ou de l'albumine, des amidons et des albumines isolés et des matières fibreuses et d'autres matières indiquées dans les revendications précédentes pouvant être ajoutées à cette masse de base.

25. Utilisation selon l'une ou plusieurs quelconques des revendications précédentes, caractérisée par la composition suivante (% en poids) :
| | |
|---|---|
| Granulé de copal de kauri | 15% - 40% |
| Froment | 10% - 50% |
| Avoine | 8% - 30% |
| Maïs | 5% - 20% |
| Soja | 5% - 20% |
| Ramie | 5% - 20% |
| Poudre de cellulose | 0,5% - 8% |
| Résinate de zinc | 0,5% - 10% |
| Hexylèneglycol | 0,2% - 20% |
